(19) Europäisches Patentamt
European Patent Office
Office européen des brevets

(11) **EP 4 252 959 A1**

(12) **EUROPEAN PATENT APPLICATION**
published in accordance with Art. 153(4) EPC

(43) Date of publication:
**04.10.2023 Bulletin 2023/40**

(21) Application number: **21897451.7**

(22) Date of filing: **09.09.2021**

(51) International Patent Classification (IPC):
**B23K 35/30** (2006.01)   **C22C 38/00** (2006.01)
**C22C 38/08** (2006.01)   **C22C 38/58** (2006.01)

(52) Cooperative Patent Classification (CPC):
**B23K 35/30; C22C 38/00; C22C 38/08; C22C 38/58**

(86) International application number:
**PCT/JP2021/033208**

(87) International publication number:
**WO 2022/113473 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.11.2020 JP 2020195753**

(71) Applicants:
• **JFE Steel Corporation**
**Tokyo 100-0011 (JP)**

• **KABUSHIKI KAISHA KOBE SEIKO SHO (KOBE
STEEL, LTD.)**
**Hyogo 651-8585 (JP)**

(72) Inventors:
• **TAKADA Atsushi**
**Tokyo 100-0011 (JP)**
• **HAN Peng**
**Fujisawa-shi, Kanagawa 251-8551 (JP)**
• **SUZUKI Masamichi**
**Fujisawa-shi, Kanagawa 251-8551 (JP)**

(74) Representative: **Hoffmann Eitle**
**Patent- und Rechtsanwälte PartmbB**
**Arabellastraße 30**
**81925 München (DE)**

(54) **WELDED JOINT AND PRODUCTION METHOD THEREFOR**

(57)   Provided is a weld joint having high strength and excellent hot crack resistance and low-temperature toughness. High Ni steel plates containing 6.5 mass% to 10.0 mass% of Ni are welded to form a weld metal to obtain a weld joint. The weld metal has a chemical composition containing Mn: 13.0 % to 25.0 %, Cr: 3.8 % or less, Ni: 1.0 % to 12.0 %, Mo: 0.1 % to 5.0 %, N: 0.080 % or less, and O: 0.100 % or less, and the strength of the weld metal is adjusted so that the yield strength BYS of each steel plate and the 0.2 % proof stress WPS of the weld metal satisfy

$$[WPS] \leq [BYS] - 100\,MPa \qquad\qquad ...\,(1)$$

and the tensile strength BTS of the steel plate and the tensile strength WTS of the weld metal satisfy

$$[WTS] \leq [BTS] + 100\,MPa \qquad\qquad ...\,(2).$$

EP 4 252 959 A1

**Description**

TECHNICAL FIELD

The present disclosure relates to, for example, a welded structure used in a cryogenic environment such as a liquefied gas storage tank, and particularly relates to improvement in the strength and cryogenic toughness of a weld joint using high Ni steel plates containing 6.5 mass% to 10.0 mass% of Ni.

BACKGROUND

9 % Ni steel is often used in storage tanks for liquefied natural gas (LNG), liquid nitrogen, liquid oxygen, and the like. In welding of 9 % Ni steel, a Ni-based alloy containing 50 % or more of Ni is commonly used as a welding material. This is because, if welding is performed using a welding material (similar composition welding material) composed of components similar to 9 % Ni steel (similar composition), low-temperature toughness (cryogenic toughness) at a cryogenic temperature of -196 °C equivalent to that of 9 % Ni steel base metal cannot be ensured in a weld joint as welded.

For example, JP 2018-144045 A (PTL 1) proposes a flux cored wire for welding of 9 % Ni steel. The wire described in PTL 1 is a flux cored wire produced by filling a Ni-based alloy outer sheath with flux, wherein the components in the flux cored wire are adjusted so as to contain, in the Ni-based alloy outer skin and the flux in total, Mn: 2.0 % to 4.5 %, Ni: 53 % to 65 %, Cr: 13 % to 19 %, Mo: 5 % to 14 %, Nb: 0.5 % to 3.0 %, Cu: 0.01 % to 0.5 %, Ti: 0.4 % to 1.0 %, C: 0.02 % or less, and Si: 0.2 % or less in mass% relative to the total mass of the wire, and contain, in the flux, Ti oxide: 3.0 % to 7.0 % in TiOz equivalent in total, Si oxide: 0.5 % to 2.0 % in $SiO_2$ equivalent in total, Zr oxide: 1.0 % to 2.0 % in $ZrO_2$ equivalent in total, Al oxide: 0.01 % to 0.1 % in $Al_2O_3$ equivalent in total, Na oxide and K oxide: 0.1 % to 0.8 % in one or more of $Na_2O$ equivalent and $K_2O$ equivalent in total, CaO: 0.1 % to 0.8 %, fluorine compound: 0.1 % to 1.0 % in F equivalent in total, and total slag forming agents consisting of oxide and fluorine compound: 6 % to 12 % in mass% relative to the total mass of the wire. According to PTL 1, using the wire to produce a 9 % Ni steel weld joint can yield a weld metal having high strength and excellent toughness and having high efficiency and high quality, such as excellent resistance to cracks and defects such as blowholes and excellent weldability in all positions.

JP S49-052737 A (PTL 2) describes a welding material for low-temperature steel. The welding material described in PTL 2 is a welding material that is obtained by reducing the Ni content and stabilizing austenite with Mn and has, in the core wire or in the core wire and part of its coating flux, a composition containing, in wt% relative to the core wire, C: 0.05 % to 0.5 %, Si: 0.15 % to 0.75 %, Mn: 20 % to 50 %, Cr: 4 % to 17 %, and N: 0.005 % to 0.5 % with the balance consisting of Fe and inevitable impurities. The composition may further contain W and Ta: 4 % or less each, or Ni and Mo: 10 % or less each. According to PTL 2, the welding material enables obtainment of a weld metal whose tensile property and impact toughness at a test temperature of -196 °C are comparable to those of Inconel alloys.

JP 2017-502842 A (PTL 3) describes a wire for flux cored arc welding. The wire described in PTL 3 contains, in wt%, C: 0.15 % to 0.8 %, Si: 0.2 % to 1.2 %, Mn: 15 % to 34 %, Cr: 6 % or less, Mo: 1.5 % to 4 %, S: 0.02 % or less, P: 0.02 % or less, B: 0.01 % or less, Ti: 0.09 % to 0.5 %, N: 0.001 % to 0.3 %, $TiO_2$: 4 % to 15 %, one or more selected from the group consisting of $SiO_2$, $ZrO_2$, and $Al_2O_3$: 0.01 % to 9 % in total, one or more selected from the group consisting of K, Na, and Li: 0.5 % to 1.7 % in total, and one or more of F and Ca: 0.2 % to 1.5 %, with the balance consisting of Fe and inevitable impurities. According to PTL 3, welding a cryogenic high Mn steel material as a welding base metal using the wire can produce a weld joint having high yield strength at room temperature and excellent cryogenic toughness without hot cracking.

JP 6621572 B1 (PTL 4) describes a solid wire for gas metal arc welding. The solid wire described in PTL 4 is a wire having a composition containing, in mass%, C: 0.2 % to 0.8 %, Si: 0.15 % to 0.90 %, Mn: 17.0 % to 28.0 %, P: 0.03 % or less, S: 0.03 % or less, Ni: 0.01 % to 10.00 %, Cr: 0.4 % to 4.0 %, Mo: 0.01 % to 3.50 %, B: less than 0.0010 %, and N: 0.12 % or less with the balance consisting of Fe and inevitable impurities. According to PTL 4, butting steel plates having a composition of 0.5 % C-0.4 % Si-25 % Mn-3 % Cr-balance Fe in mass% and performing gas metal arc welding using the solid wire can produce a deposit metal having high strength, specifically, a yield strength at room temperature of 400 MPa or more, and excellent cryogenic toughness, specifically, an absorbed energy $vE_{-196}$ at a test temperature of -196 °C of 28 J or more.

CITATION LIST

Patent Literature

PTL 1: JP 2018-144045 A
PTL 2: JP S49-052737 A
PTL 3: JP 2017-502842 A
PTL 4: JP 6621572 B1

SUMMARY

(Technical Problem)

The welding material described in PTL 1 is a Ni-based alloy welding material containing 50 % or more of Ni, and is expensive. Moreover, our studies revealed the following: When a weld joint of 9 % Ni steel is produced using the high Mn steel welding material described in PTL 2, hot cracking occurs. In addition, when the high Mn steel wire described in each of PTL 3 and PTL 4 is used to weld 9 % Ni steel, it cannot necessarily be ensured that the absorbed energy $vE_{-196}$ in the Charpy impact test at a test temperature of - 196 °C is 27 J or more at the boundary (hereafter referred to as weld bond (fusion boundary)) between the base metal and the weld metal.

It could therefore be helpful to provide a weld joint that is formed by welding high Ni steel plates containing 6.5 % to 10.0 % of Ni in mass% and in which a weld metal has excellent hot crack resistance, high strength, and excellent low-temperature toughness and a weld bond has excellent low-temperature toughness.

As used herein, "high strength" of the weld metal means that the yield strength WYS (0.2 % proof stress) at room temperature is 400 MPa or more and the tensile strength WTS at room temperature is 660 MPa or more. As used herein, "excellent low-temperature toughness" of the weld metal and the weld bond means that the absorbed energy $vE_{-196}$ in the Charpy impact test at a test temperature of -196 °C is 27 J or more.

(Solution to Problem)

First, we carefully examined various factors that influence hot cracking of a weld metal having a weld metal chemical composition containing 13 mass% or more of Mn and having austenite microstructure even at cryogenic temperatures. We consequently discovered that an effective way of suppressing hot cracking of the weld metal containing 13 mass% or more of Mn and having austenite microstructure is to limit Cr to 4.0 mass% or less. We also discovered that, if the Cr content in the weld metal is more than 4.0 mass%, carbides ($Cr_{23}C_6$) precipitate to austenite grain boundaries and embrittles the grain boundaries, as a result of which opening occurs due to thermal strain introduced during welding and hot cracking ensues.

Moreover, we carefully examined various factors that influence the low-temperature property of the weld bond in the case where the weld metal is austenite microstructure even at cryogenic temperatures, and observed the fracture propagation path for various Charpy impact test pieces tested at cryogenic temperatures. We consequently discovered that fracture propagates through the weld metal in the case where the weld bond is excellent in low-temperature toughness with an absorbed energy $vE_{-196}$ of 27 J or more while fracture propagates through the heat-affected zone in the case where the weld bond is inferior in low-temperature toughness with an absorbed energy $vE_{-196}$ of less than 27 J. This is because of the following reason: the base metal of high Mn steel is subjected to heat treatment (quenching-tempering) to form microstructure, and cryogenic toughness is ensured by this heat treatment; in the heat-affected zone, on the other hand, the cryogenic toughness decreases due to coarsening of microstructure; and, meanwhile, the weld metal that contains 13 mass% or more of Mn and whose microstructure is austenite microstructure maintains excellent low-temperature toughness.

Upon further examination based on these discoveries, we discovered that an effective way of obtaining a weld bond having excellent low-temperature toughness where fracture propagates not through the heat-affected zone of the weld joint but through the weld metal is to limit the welding heat input to 0.5 kJ/mm to 6.0 kJ/mm and adjust the strength of the weld metal so that the 0.2 % proof stress WPS of the weld metal and the yield strength BYS of the steel plate (base metal) will satisfy the following formula (1):

$$[\text{WPS}] \leq [\text{BYS}] - 100 \text{ MPa} \qquad \dots (1)$$

where WPS is the 0.2 % proof stress (MPa) of the weld metal and BYS is the yield strength (MPa) of the steel plate (base metal), and the tensile strength WTS of the weld metal and the tensile strength BTS of the steel plate (base metal) will satisfy the following formula (2):

$$[\text{WTS}] \leq [\text{BTS}] + 100 \text{ MPa} \qquad \dots (2)$$

where WTS is the tensile strength (MPa) of the weld metal and BTS is the tensile strength (MPa) of the steel plate (base metal).

The present disclosure is based on these discoveries and further studies. We thus provide:

[1] A weld joint comprising steel plates and a weld metal, the weld joint formed by welding the steel plates through the weld metal, the steel plates comprising a steel plate chemical composition containing (consisting of), in mass%, C: 0.02 % to 0.20 %, Si: 0.05 % to 0.50 %, Mn: 0.10 % to 1.80 %, P: 0.030 % or less, S: 0.030 % or less, Ni: 6.5 % to 10.0 %, N: 0.010 % or less, and O: 0.010 % or less, with a balance consisting of Fe and inevitable impurities, the weld metal comprising: a weld metal chemical composition containing (consisting of), in mass%, C: 0.10 % to 0.80 %, Si: 0.10 % to 1.00 %, Mn: 13.0 % to 25.0 %, P: 0.030 % or less, S: 0.030 % or less, Ni: 1.0 % to 12.0 %, Cr: 0.4 % to 3.8 %, Mo: 0.1 % to 5.0 %, N: 0.080 % or less, and O: 0.100 % or less, with a balance consisting of Fe and inevitable impurities; and tensile properties of a 0.2 % proof stress WPS of 400 MPa or more and a tensile strength WTS of 660 MPa or more, a yield strength BYS of the steel plate and the 0.2 % proof stress WPS of the weld metal satisfying the following formula (1):

$$[WPS] \leq [BYS] - 100 \text{ MPa} \qquad \ldots (1)$$

where WPS is the 0.2 % proof stress of the weld metal in MPa and BYS is the yield strength of the steel plate in MPa, and a tensile strength BTS of the steel plate and the tensile strength WTS of the weld metal satisfying the following formula (2):

$$[WTS] \leq [BTS] + 100 \text{ MPa} \qquad \ldots (2)$$

where WTS is the tensile strength of the weld metal in MPa and BTS is the tensile strength of the steel plate in MPa.
[2] The weld joint according to [1], wherein the weld metal chemical composition further contains, in mass%, one or more selected from the following (i) and (ii): (i) one or more selected from the group consisting of V: 1.0 % or less, Ti: 1.0 % or less, Nb: 1.0 % or less, and W: 1.0 % or less; and (ii) one or more selected from the group consisting of Cu: 2.0 % or less, Al: 1.0 % or less, Ca: 0.010 % or less, and REM: 0.020 % or less.
[3] The weld joint according to [1] or [2], wherein the steel plate chemical composition further contains, in mass%, one or more selected from the following (iii) and (iv): (iii) one or more selected from the group consisting of Cu: 0.5 % or less, Al: 0.1 % or less, Cr: 1.0 % or less, Mo: 1.0 % or less, V: 0.2 % or less, Nb: 0.2 % or less, and Ti: 0.2 % or less; and (iv) one or more selected from the group consisting of B: 0.005 % or less, Ca: 0.005 % or less, and REM: 0.020 % or less.
[4] A production method for a weld joint excellent in low-temperature toughness, comprising: subjecting steel plates to gas metal arc welding using a solid wire to form a weld metal to obtain the weld joint; and adjusting welding conditions of the gas metal arc welding to obtain a welding heat input per one pass of 0.5 kJ/mm to 6.0 kJ/mm so that a 0.2 % proof stress WPS of the weld metal satisfies the following formula (1) in relation to a yield strength BYS of the steel plate and a tensile strength WTS of the weld metal satisfies the following formula (2) in relation to a tensile strength BTS of the steel plate:

$$[WPS] \leq [BYS] - 100 \text{ MPa} \qquad \ldots (1)$$

$$[WTS] \leq [BTS] + 100 \text{ MPa} \qquad \ldots (2)$$

where WPS is the 0.2 % proof stress of the weld metal in MPa, WTS is the tensile strength of the weld metal in MPa, BYS is the yield strength of the steel plate in MPa, and BTS is the tensile strength of the steel plate in MPa, the steel plates comprising a steel plate chemical composition containing, in mass%, C: 0.02 % to 0.20 %, Si: 0.05 % to 0.50 %, Mn: 0.10 % to 1.80 %, P: 0.030 % or less, S: 0.030 % or less, Ni: 6.5 % to 10.0 %, N: 0.010 % or less, and O: 0.010 % or less, with a balance consisting of Fe and inevitable impurities, the solid wire comprising a wire chemical composition containing, in mass%, C: 0.15 % to 1.00 %, Si: 0.15 % to 1.10 %, Mn: 17.0 % to 30.0 %, P: 0.030 % or less, S: 0.030 % or less, Ni: 0.2 % to 13.0 %, Cr: 0.4 % to 3.8 %, Mo: 0.1 % to 5.0 %, N: 0.060 % or less, and O: 0.020 % or less, with a balance consisting of Fe and inevitable impurities, the weld metal comprising: a weld metal chemical composition containing, in mass%, C: 0.10 % to 0.80 %, Si: 0.10 % to 1.00 %, Mn: 13.0 % to 25.0 %, P: 0.030 % or less, S: 0.030 % or less, Ni: 1.0 % to 12.0 %, Cr: 0.4 % to 3.8 %, Mo: 0.1 % to 5.0 %, N:

0.080 % or less, and O: 0.100 % or less, with a balance consisting of Fe and inevitable impurities; and tensile properties of a 0.2 % proof stress WPS of 400 MPa or more and a tensile strength WTS of 660 MPa or more.

[5] The production method for a weld joint according to [4], wherein the wire chemical composition further contains, in mass%, one or more selected from the following (v) and (vi): (v) one or more selected from the group consisting of V: 1.0 % or less, Ti: 1.0 % or less, Nb: 1.0 % or less, and W: 1.0 % or less; and (vi) one or more selected from the group consisting of Cu: 2.0 % or less, Al: 1.0 % or less, Ca: 0.010 % or less, and REM: 0.020 % or less, and the weld metal chemical composition further contains, in mass%, one or more selected from the following (i) and (ii): (i) one or more selected from the group consisting of V: 1.0 % or less, Ti: 1.0 % or less, Nb: 1.0 % or less, and W: 1.0 % or less; and (ii) one or more selected from the group consisting of Cu: 2.0 % or less, Al: 1.0 % or less, Ca: 0.010 % or less, and REM: 0.020 % or less.

[6] The production method for a weld joint according to [4] or [5], wherein the steel plate chemical composition further contains, in mass%, one or more selected from the following (iii) and (iv): (iii) one or more selected from the group consisting of Cu: 0.5 % or less, Al: 0.1 % or less, Cr: 1.0 % or less, Mo: 1.0 % or less, V: 0.2 % or less, Nb: 0.2 % or less, and Ti: 0.2 % or less; and (iv) one or more selected from the group consisting of B: 0.005 % or less, Ca: 0.005 % or less, and REM: 0.020 % or less.

(Advantageous Effect)

It is thus possible to easily produce a weld joint having high strength and excellent low-temperature toughness without hot cracking, without using an expensive Ni-based welding material. This has remarkable industrial effects.

It is also possible to provide a weld joint having high strength and excellent low-temperature toughness.

DETAILED DESCRIPTION

[Weld joint]

A weld joint according to the present disclosure is a weld joint formed by welding high Ni steel plates each having a basic composition containing, in mass%, C: 0.02 % to 0.20 %, Si: 0.05 % to 0.50 %, Mn: 0.10 % to 1.80 %, and Ni: 6.5 % to 10.0 %, through a weld metal. The number of high Ni steel plates welded may be two or more. Hereafter, "mass%" with regard to the composition is simply expressed as "%".

<High Ni steel plate>

Each high Ni steel plate used as a base metal (part to be welded) has a steel plate chemical composition containing, in mass%, C: 0.02 % to 0.20 %, Si: 0.05 % to 0.50 %, Mn: 0.10 % to 1.80 %, P: 0.030 % or less, S: 0.030 % or less, Ni: 6.5 % to 10.0 %, N: 0.010 % or less, and O: 0.010 % or less, with the balance consisting of Fe and inevitable impurities. The high Ni steel plate may optionally contain, besides the foregoing components, one or more alloy elements as optional elements. For example, one or more selected from the group consisting of Cu: 0.5 % or less, Al: 0.1 % or less, Cr: 1.0 % or less, Mo: 1.0 % or less, V: 0.2 % or less, Nb: 0.2 % or less, and Ti: 0.2 % or less, with which improvement in strength and toughness can be expected, and/or one or more selected from the group consisting of B: 0.005 % or less, Ca: 0.005 % or less, and REM: 0.020 % or less, with which improvement in toughness can be expected, may be used as optional elements.

<Weld metal>

The weld metal in the weld joint according to the present disclosure has a chemical composition (weld metal chemical composition) containing, in mass%, C: 0.10 % to 0.80 %, Si: 0.10 % to 1.00 %, Mn: 13.0 % to 25.0 %, P: 0.030 % or less, S: 0.030 % or less, Ni: 1.0 % to 12.0 %, Cr: 0.4 % to 3.8 %, Mo: 0.1 % to 5.0 %, N: 0.080 % or less, and O: 0.100 % or less, with the balance consisting of Fe and inevitable impurities.

First, the reasons for limiting the chemical composition of the weld metal will be explained below.

C: 0.10 % to 0.80 %

C is an element that stabilizes austenite and also has the effect of increasing the strength of the weld metal by solid solution strengthening. To achieve these effects, the C content needs to be 0.10 % or more. If the C content is more than 0.80 %, hot cracking is likely to occur during welding. The C content is therefore limited to the range of 0.10 % to 0.80 %. The C content is preferably 0.15 % or more. The C content is preferably 0.60 % or less.

Si: 0.10 % to 1.00 %

Si suppresses the precipitation of carbides to thus cause C to dissolve in austenite and stabilize austenite. To achieve this effect, the Si content needs to be 0.10 % or more. If the Si content is more than 1.00 %, Si segregates during solidification and forms liquid phase at the interface of solidification cells, causing a decrease in hot crack resistance. The Si content is therefore limited to the range of 0.10 % to 1.00 %. The Si content is preferably 0.20 % or more. The Si content is preferably 0.90 % or less.

Mn: 13.0 % to 25.0 %

Mn is an inexpensive element that stabilizes austenite phase. In the present disclosure, the Mn content needs to be 13.0 % or more. If the Mn content is less than 13.0 %, the stability of austenite is insufficient, so that hard martensite phase forms in the weld metal and the toughness decreases. If the Mn content is more than 25.0 %, excessive Mn segregation occurs during solidification, causing hot cracking. The Mn content is therefore limited to the range of 13.0 % to 25.0 %. The Mn content is preferably 15.0 % or more. The Mn content is preferably 22.0 % or less.

P: 0.030 % or less

P is an element that segregates to crystal grain boundaries and causes hot cracking. In the present disclosure, it is desirable to reduce the P content as much as possible, yet a content of 0.030 % or less is acceptable. The P content is therefore limited to 0.030 % or less. Excessive reduction leads to an increase in refining cost. Therefore, the P content is preferably adjusted to 0.002 % or more.

S: 0.030 % or less

S is an element that segregates to crystal grain boundaries and causes hot cracking. In the present disclosure, it is desirable to reduce the S content as much as possible, yet a content of 0.030 % or less is acceptable. The S content is therefore limited to 0.030 % or less. Excessive reduction leads to an increase in refining cost. Therefore, the S content is preferably adjusted to 0.001 % or more.

Ni: 1.0 % to 12.0 %

Ni is an element that strengthens austenite grain boundaries, and suppresses embrittlement of grain boundaries to thus suppress hot cracking. To achieve this effect, the Ni content needs to be 1.0 % or more. Ni also has the effect of stabilizing austenite phase. However, Ni is expensive, and a content of more than 12.0 % is economically disadvantageous. The Ni content is therefore limited to the range of 1.0 % to 12.0 %. The Ni content is preferably 2.0 % or more. The Ni content is preferably 11.0 % or less.

Cr: 0.4 % to 3.8 %

Cr acts as an element that stabilizes austenite phase at cryogenic temperatures, and improves the low-temperature toughness (cryogenic toughness) of the weld metal. Cr also has the effect of improving the strength of the weld metal. In addition, Cr is effective in reducing the solid-liquid coexisting temperature range and suppressing hot cracking. Cr is also effective in enhancing the corrosion resistance of the weld metal. To achieve these effects, the Cr content needs to be 0.4 % or more. If the Cr content is less than 0.4 %, these effects cannot be ensured. If the Cr content is more than 3.8 %, Cr carbides precipitate to grain boundaries and embrittles the grain boundaries, as a result of which opening occurs due to thermal strain introduced during welding and hot cracking ensues. The Cr content is therefore limited to the range of 0.4 % to 3.8 %. The Cr content is preferably 0.6 % or more. The Cr content is preferably 3.5 % or less.

Mo: 0.1 % to 5.0 %

Mo is an element that strengthens austenite grain boundaries, and suppresses embrittlement of grain boundaries to thus suppress hot cracking. Mo also has the effect of improving the wear resistance by hardening the weld metal. To achieve these effects, the Mo content needs to be 0.1 % or more. If the Mo content is more than 5.0 %, the inside of the grains hardens excessively, and the grain boundaries weaken relatively, causing hot cracking. The Mo content is therefore limited to the range of 0.1 % to 5.0 %. The Mo content is preferably 0.5 % or more. The Mo content is preferably 4.0 % or less.

O: 0.100 % or less

O (oxygen) is an inevitably contained element, but forms Al-based oxides and Si-based oxides in the weld metal and contributes to suppression of the coarsening of the solidification microstructure. This effect is evident when the O content is 0.003 % or more, and thus the O content is preferably 0.003 % or more. If O is excessively added in an amount of more than 0.100 %, oxides coarsen significantly. The O (oxygen) content is therefore limited to 0.100 % or less. The O content is preferably 0.003 % or more. The O content is preferably 0.060 % or less.

N: 0.080 % or less

N is an inevitably contained element, but, as with C, effectively contributes to improvement of the strength of the weld metal, stabilizes austenite phase, and stably improves the cryogenic toughness. These effects are evident when the N content is 0.003 % or more, and thus the N content is preferably 0.003 % or more. If the N content is more than 0.080 %, nitrides form and the low-temperature toughness decreases. The N content is therefore limited to 0.080 % or less. The N content is preferably 0.004 % or more. The N content is preferably 0.060 % or less.

The foregoing components are the basic components in the weld metal of the weld joint according to the present disclosure. In addition to the basic components, the weld metal of the weld joint according to the present disclosure may optionally further contain one or more selected from the group consisting of V: 1.0 % or less, Ti: 1.0 % or less, Nb: 1.0 % or less, and W: 1.0 % or less and/or one or more selected from the group consisting of Cu: 2.0 % or less, Al: 1.0 % or less, Ca: 0.010 % or less, and REM: 0.020 % or less, as optional components.

One or more selected from the group consisting of V: 1.0 % or less, Ti: 1.0 % or less, Nb: 1.0 % or less, and W: 1.0 % or less

V, Ti, Nb, and W are each a carbide forming element, and cause fine carbides to precipitate into austenite grains and contribute to improvement of the strength of the weld metal. One or more of these elements may be optionally selected and added.

V is a carbide forming element, and causes fine carbides to precipitate into austenite grains and contributes to improvement of the strength of the weld metal. To achieve this effect, the V content is preferably 0.001 % or more. If the V content is more than 1.0 %, excessive carbides act as a fracture origin, and consequently the low-temperature toughness decreases. Accordingly, in the case of containing V, the V content is preferably limited to 1.0 % or less. The V content is more preferably 0.002 % or more. The V content is more preferably 0.600 % or less.

Ti is a carbide forming element, and causes fine carbides to precipitate and contributes to improvement of the strength of the weld metal, as with V. To achieve this effect, the Ti content is preferably 0.001 % or more. If the Ti content is more than 1.0 %, excessive carbides act as a fracture origin, and consequently the low-temperature toughness decreases. Accordingly, in the case of containing Ti, the Ti content is preferably limited to 1.0 % or less. The Ti content is more preferably 0.002 % or more. The Ti content is more preferably 0.600 % or less.

Nb is a carbide forming element, and causes fine carbides to precipitate and contributes to improvement of the strength of the weld metal, as with V and Ti. To achieve this effect, the Nb content is preferably 0.001 % or more. If the Nb content is more than 1.0 %, excessive carbides act as a fracture origin, and consequently the low-temperature toughness decreases. Accordingly, in the case of containing Nb, the Nb content is preferably limited to 1.0 % or less. The Nb content is more preferably 0.002 % or more. The Nb content is more preferably 0.600 % or less.

W is a carbide forming element, and causes fine carbides to precipitate and contributes to improvement of the strength of the weld metal, as with V, Ti, and Nb. To achieve this effect, the W content is preferably 0.001 % or more. If the W content is more than 1.0 %, excessive carbides act as a fracture origin, and consequently the low-temperature toughness decreases. Accordingly, in the case of containing W, the W content is preferably limited to 1.0 % or less. The W content is more preferably 0.002 % or more. The W content is more preferably 0.600 % or less.

One or more selected from the group consisting of Cu: 2.0 % or less, Al: 1.0 % or less, Ca: 0.010 % or less, and REM: 0.020 % or less

Cu is an element that contributes to austenite stabilization. Al is an element that acts as a deoxidizer. Ca and REM are each an element that contributes to suppression of hot cracking. One or more of these elements may be optionally selected and added.

Cu: 2.0 % or less

Cu is an element that stabilizes austenite phase. To achieve this effect, the Cu content is preferably 0.01 % or more. If Cu is excessively added in an amount of more than 2.0 %, liquid phase with a low melting point forms at austenite grain boundaries, causing hot cracking. Accordingly, in the case of containing Cu, the Cu content is preferably limited to 2.0 % or less. The Cu content is more preferably 0.02 % or more. The Cu content is more preferably 1.6 % or less.

Al: 1.0 % or less

Al acts as a deoxidizer, and has the important effect of increasing the viscosity of molten metal, stably maintaining the bead shape, and reducing spatter. Al also reduces the solid-liquid coexisting temperature range, and contributes to suppression of hot cracking in the weld metal. These effects are evident when the Al content is 0.001 % or more, and thus the Al content is preferably 0.001 % or more. If the Al content is more than 1.0 %, the viscosity of molten metal is excessively high, which conversely increases defects such as spatter and incomplete fusion caused by no spreading of bead. Accordingly, in the case of containing Al, the Al content is preferably limited to 1.0 % or less. The Al content is more preferably 0.002 % or more. The Al content is more preferably 0.8 % or less.

One or two out of Ca: 0.010 % or less and REM: 0.020 % or less

Ca and REM are each an element that contributes to suppression of hot cracking. Ca combines with S in molten metal to form sulfide CaS with a high melting point, thus suppressing hot cracking. This effect is evident when the Ca content is 0.001 % or more. If the Ca content is more than 0.010 %, arc is disturbed during welding, which hinders stable welding. Accordingly, in the case of containing Ca, the Ca content is preferably limited to 0.010 % or less. The Ca content is more preferably 0.002 % or more. The Ca content is more preferably 0.008 % or less.

REM is a powerful deoxidizer, and exists in the weld metal in the form of REM oxides. The REM oxides act as a nucleation site during solidification, thereby changing the solidification morphology of the weld metal and contributing to suppression of hot cracking. These effects are evident when the REM content is 0.001 % or more. If the REM content is more than 0.020 %, the stability of arc decreases. Accordingly, in the case of containing REM, the REM content is preferably limited to 0.020 % or less. The REM content is more preferably 0.002 % or more. The REM content is more preferably 0.016 % or less.

The balance other than the foregoing components consists of Fe and inevitable impurities. Examples of the inevitable impurities include Bi, Sn, and Sb, and a total content of 0.2 % or less is acceptable.

The weld metal with the foregoing chemical composition is a weld metal having high strength, specifically, tensile properties of a 0.2 % proof stress WPS of 400 MPa or more and a tensile strength WTS of 660 MPa or more, and having excellent low-temperature toughness.

The welding conditions are adjusted within the range of the foregoing weld metal chemical composition so that the 0.2 % proof stress WPS of the weld metal will satisfy the following formula (1) in relation to the yield strength BYS of the steel plate:

$$[WPS] \leq [BYS] - 100 \text{ MPa} \qquad \dots (1)$$

and the tensile strength WTS of the weld metal will satisfy the following formula (2) in relation to the tensile strength BTS of the steel plate:

$$[WTS] \leq [BTS] + 100 \text{ MPa} \qquad \dots (2).$$

Specifically, the welding conditions are adjusted so that the welding heat input per one pass will be 0.5 kJ/mm to 6.0 kJ/mm.

In the case where the weld metal satisfies both of the formulas (1) and (2), the fracture in the weld bond makes progress toward the weld metal side, and high absorbed energy is exhibited. Such a weld bond is excellent in low-temperature toughness (cryogenic toughness).

[Production method for weld joint]

A preferred production method for a weld joint according to the present disclosure will be described below.

First, two or more high Ni steel plates having the desired thickness and the foregoing steel plate chemical composition are prepared as parts to be welded. The prepared steel plates are then subjected to edge preparation (groove machining) so as to form a certain groove shape. The groove shape formed is not limited, and examples include grooves such as single bevel groove and single V groove common in welded structures.

The steel plates subjected to edge preparation are then butted, and welded using a welding material (solid wire) to be joined through the formation of a multilayer weld metal, thus producing a weld joint.

<Welding method>

The welding method is not limited as long as a (multilayer) weld metal having the desired properties can be formed. To form a weld metal and a bond having the desired strength and excellent low-temperature toughness, multilayer fill gas metal arc welding with a heat input amount per one pass of 0.5 kJ/mm to 6.0 kJ/mm is preferable. The welding material used is not limited as long as the foregoing weld metal can be formed.

<Welding material>

A preferred production method for the welding material (solid wire) used will be described below.
For the solid wire used in the present disclosure, any common method of producing a solid wire for welding may be used.
The solid wire used is preferably a wire having the following wire chemical composition so that the foregoing weld metal can be formed: The wire chemical composition contains C: 0.15 % to 1.00 %, Si: 0.15 % to 1.10 %, Mn: 17.0 % to 30.0 %, P: 0.030 % or less, S: 0.030 % or less, Ni: 0.2 % to 13.0 %, Cr: 0.4 % to 3.8 %, Mo: 0.1 % to 5.0 %, N: 0.060 % or less, and O: 0.020 % or less as basic elements, and optionally further contains one or more selected from the group consisting of V: 1.0 % or less, Ti: 1.0 % or less, Nb: 1.0 % or less, and W: 1.0 % or less and/or one or more selected from the group consisting of Cu: 2.0 % or less, Al: 1.0 % or less, Ca: 0.010 % or less, and REM: 0.020 % or less as optional alloy elements, with the balance consisting of Fe and inevitable impurities.
The producing method of the solid wire is preferable to sequentially perform a casting process in which molten steel having the foregoing wire chemical composition is obtained as a result of smelting by a common smelting method such as an electric furnace or a vacuum melting furnace and cast into, for example, a mold having a certain shape to obtain a steel material such as a steel ingot, thereafter a heating process in which the obtained steel material such as a steel ingot is heated to a certain temperature, thereafter a hot rolling process in which the heated steel material is subjected to hot rolling to obtain a rod-shaped body having a certain shape, and thereafter a cold rolling process in which the obtained rod-shaped body is subjected to cold rolling (cold wiredrawing) a plurality of times and optionally subjected to annealing to obtain a wire of the desired dimensions. The annealing temperature in the annealing is preferably 1000 °C to 1200 °C.
The presently disclosed techniques will be described in more detail below by way of examples.

EXAMPLES

First, high Ni steel plates of 30 mm in thickness having the steel plate chemical compositions shown in Table 1 were prepared as test plates. A No. 10 test piece defined in JIS Z 2241 was collected from the thickness center of each steel plates, and a tensile test was conducted at room temperature. The obtained tensile properties (yield strength BYS, tensile strength BTS) of each steel plate are shown in Table 1.
Next, welding materials (solid wires) were produced.
Molten steels having the chemical compositions (wire chemical compositions) shown in Table 2 were obtained by smelting in a vacuum melting furnace, and each cast to obtain a steel ingot (100 kgf). The obtained steel ingot was heated to 1200 °C, and then subjected to hot rolling to obtain a rod-shaped steel material. The obtained rod-shaped steel material was then further subjected to cold rolling (cold wiredrawing) a plurality of times with annealing being performed therebetween, to obtain a 1.2 mmΦ solid wire for welding.
After this, the prepared test plates (high Ni steel plates of 30 mm in thickness, 150 mm in width, and 400 mm in length) were subjected to edge preparation to form a single bevel groove (groove angle: 45°). Gas metal arc welding was performed in the groove in shielding gas using the obtained solid wire for welding as a welding material to form a multilayer fill weld metal and obtain a weld joint. The welding conditions were as follows: flat position, current: 150 A to 450 A (DCEP), voltage: 20 V to 40 V, welding speed: 15 cm/min to 60 cm/min, interpass temperature: 100 °C to 200 °C, shielding gas: 80 % Ar-20 % $CO_2$. In Examples, the welding heat input per one pass was adjusted to the range of 0.5 kJ/mm to 6.0 kJ/mm, in order to adjust the strength of the weld metal (see Table 3). The atmospheric temperature during welding was 18 °C, and the humidity during welding was 40 %.
An analytical test piece was collected from the range of Φ10 mm at the thickness and width center position of the weld metal of each obtained weld joint, and the chemical composition of the weld metal was analyzed by chemical analysis. The results are shown in Table 3.
Next, the weld metal and the heat-affected zone of each obtained weld joint were observed using an optical microscope (100 magnification), to investigate whether weld cracking (hot cracking) occurred. In the case where cracking was found in the weld metal, it was determined that weld cracking occurred ("Occurred"). In the case where no cracking was found in the weld metal, it was determined that weld cracking did not occur ("Not occurred").
Moreover, No. 14A tensile test pieces (parallel portion diameter: 12.5 mmΦ) were collected from the thickness and width center position of the weld metal of each obtained weld joint in accordance with JIS Z 2241, and a tensile test was conducted at room temperature to determine the strength (0.2 % proof stress WPS, tensile strength WTS) of the weld metal. The tensile test was conducted on three tensile test pieces, and the average value was taken to be the strength of the weld metal.

Using the determined 0.2 % proof stress WPS and tensile strength WTS of the weld metal and the yield strength BYS and tensile strength BTS of the steel plate shown in Table 1, the right-side value and the left-side value of each of the formulas (1) and (2) were calculated. For each of the formulas (1) and (2), "o" indicates that the formula was satisfied, and "×" indicates that the formula was not satisfied.

Further, Charpy impact test pieces (V notch: 10 mm thick) were collected from each obtained weld joint, and a Charpy impact test was conducted at a test temperature of -196 °C in accordance with JIS Z 2242 to determine the absorbed energy $E_{-196}$ (J) at a test temperature of -196 °C. Three test pieces were prepared for each of weld metal measurement and weld bond measurement, and the respective average values were taken to be the absorbed energies $E_{-196}$ of the weld metal and the weld bond of the weld joint. The Charpy impact test pieces were collected so that the thickness center of each test piece would be at a position of 7 mm in the thickness direction from the steel plate surface and so that the notch positions of the Charpy impact test pieces for weld metal measurement and for weld bond measurement would be respectively the width center position of the weld metal and the weld bond.

Moreover, among the Charpy impact test pieces after the test, each Charpy impact test piece with the notch position in the weld bond was cut at the thickness center position, and then the cut section was etched with 2 % nital and observed using an optical microscope (50 magnification) to determine whether the crack generated from the notch propagated through the weld metal or the heat-affected zone (HAZ), to thus investigate the fracture propagation path from the notch.

The results are shown in Table 4.

[Table 1]

Table 1

| Steel plate No. | Chemical composition (mass%) | | | | | | | | | | Yield strength of steel plate BYS (MPa) | Tensile strength of steel plate BTS (MPa) |
| --- | --- | --- | --- | --- | --- | --- | --- | --- | --- | --- | --- | --- |
| | C | Si | Mn | P | S | Ni | O | N | Al,Cu,Cr,Mo,V,Nb,Ti | B,Ca,REM | | |
| A | 0.06 | 0.20 | 0.6 | 0.005 | 0.001 | 9.1 | 0.003 | 0.003 | - | - | 670 | 740 |
| B | 0.18 | 0.06 | 1.8 | 0.025 | 0.002 | 6.8 | 0.007 | 0.008 | Al:0.1, Cu:0.4, Cr:0.8, Mo:0.7 | Ca:0.004 | 650 | 760 |
| C | 0.03 | 0.46 | 0.2 | 0.010 | 0.021 | 9.7 | 0.005 | 0.005 | V:0.2, Nb:0.1, Ti:0.2 | B:0.004, REM:0.020 | 580 | 720 |

[Table 2]

Table 2

| Wire No. | Chemical compositionl (mass%) | | | | | | | | | | | | Remarks |
|---|---|---|---|---|---|---|---|---|---|---|---|---|---|
| | C | Si | Mn | P | S | Ni | Cr | Mo | N | O | V,Ti,Nb,W | Cu,Al,Ca,REM | |
| a | 0.59 | 0.37 | 30.0 | 0.012 | 0.021 | 2.5 | 0.6 | 1.5 | 0.004 | 0.003 | - | - | Conforming Example |
| b | 0.52 | 0.58 | 25.0 | 0.026 | 0.016 | 5.1 | 3.8 | 0.5 | 0.004 | 0.005 | - | - | Conforming Example |
| c | 0.28 | 0.42 | 23.4 | 0.005 | 0.024 | 12.5 | 3.5 | 0.1 | 0.005 | 0.010 | V:0.5, Ti:0.8, Nb:0.2 | - | Conforming Example |
| d | 0.18 | 0.18 | 19.7 | 0.017 | 0.028 | 2.1 | 0.8 | 4.8 | 0.004 | 0.002 | W:0.6 | - | Conforming Example |
| e | 0.43 | 0.41 | 20.4 | 0.021 | 0.013 | 4.2 | 1.4 | 1.5 | 0.002 | 0.006 | V:0.8, Ti:0.9 | - | Conforming Example |
| f | | 0.71 0.72 | 25.2 | 0.016 | 0.008 | 7.1 | 1.6 | 0.1 | 0.004 | 0.008 | Nb:1.0 | - | Conforming Example |
| 9 | 0.39 | 0.21 | 24.2 | 0.013 | 0.015 | 1.3 | 0.8 | 2.8 | 0.004 | 0.012 | - | Cu:1.8, Al:0.8 | Conforming Example |
| h | 0.92 | 0.48 | 20.6 | 0.017 | 0.027 | 4.8 | 1.1 | 3.2 | 0.012 | 0.005 | - | Al:0.1 | Conforming Example |
| i | 0.51 | 0.25 | 17.3 | 0.025 | 0.008 | 8.8 | 2.1 | 2.3 | 0.045 | 0.006 | W:0.9 | A1:0.6, REM:0.011 | Conforming Example |
| j | 0.27 | 1.05 | 23.8 | 0.016 | 0.024 | 0.4 | 1.6 | 3.1 | 0.004 | 0.003 | - | REM:0.006 | Conforming Example |
| k | 0.36 | 0.37 | 24.8 | 0.009 | 0.017 | 2.3 | 0.9 | 1.5 | 0.008 | 0.012 | Ti:0.2 | Ca:0.001 | Conforming Example |
| l | 0.45 | 0.75 | 21.6 | 0.016 | 0.016 | 3.6 | 1.1 | 0.1 | 0.024 | 0.010 | Ti:0.1, Nb:0.4 | Cu:0.8, REM:0.018 | Conforming Example |
| m | 0.48 | 0.44 | 19.7 | 0.023 | 0.009 | 6.3 | 1.2 | 3.7 | 0.042 | 0.008 | V:0.1 | Ca:0.006 | Conforming Example |
| n | 0.52 | 0.30 | 18.1 | 0.014 | 0.010 | 1.4 | 1.8 | 2.1 | 0.004 | 0.009 | Nb:0.1 | - | Conforming Example |
| o | 0.21 | 0.53 | 25.3 | 0.016 | 0.019 | 8.1 | 1.7 | 4.2 | 0.005 | 0.002 | V:0.4, Ti:0.2 | - | Conforming Example |
| p | 0.37 | 0.46 | 18.3 | 0.018 | 0.027 | _ | 2.4 | 0.6 | 0.007 | 0.004 | - | Ca:0.002, REM:0.006 | Comparative Example |
| q | 0.46 | 0.28 | 35.1 | 0.013 | 0.024 | 1.8 | 1.8 | 2.8 | 0.004 | 0.006 | Ti:0.5 | Ca:0.001 | Comparative Example |
| r | 1.04 | 0.38 | 19.2 | 0.021 | 0.015 | 2.5 | 1.2 | 4.2 | 0.019 | 0.008 | - | - | Comparative Example |
| s | 0.39 | 0.72 | 24.6 | 0.007 | 0.021 | 1.5 | 0.3 | 1.2 | 0.028 | 0.012 | V:0.2, Nb:0.6 | - | Comparative Example |
| t | 0.39 | 0.62 | 15.2 | 0.026 | 0.021 | 3.1 | 1.6 | 4.7 | 0.042 | 0.003 | - | Al:0.3 | Comparative Example |
| u | 0.53 | 1.50 | 20.7 | 0.025 | 0.013 | 4.7 | 1.5 | 0.4 | 0.005 | 0.004 | Ti:0.2 | Cu:0.2, Ca:0.001 | Comparative Example |
| v | 0.42 | 0.25 | 19.6 | 0.052 | 0.012 | 1.3 | 1.2 | 1.3 | 0.002 | 0.002 | - | Ca:0.007, REM:0.013 | Comparative Example |
| w | 0.74 | 0.42 | 26.2 | 0.008 | 0.064 | 3.1 | 0.8 | 1.9 | 0.006 | 0.006 | - | - | Comparative Example |

(continued)

| Wire No. | Chemical compositionl (mass%) | | | | | | | | | | | | Remarks |
|---|---|---|---|---|---|---|---|---|---|---|---|---|---|
| | C | Si | Mn | P | S | Ni | Cr | Mo | N | O | V,Ti,Nb,W | Cu,Al,Ca,REM | |
| x | 0.47 | 0.07 | 19.7 | 0.016 | 0.014 | 1.8 | 0.9 | 0.8 | 0.003 | 0.005 | - | Al:0.1 | Comparative Example |
| y | 0.05 | 0.47 | 20.4 | 0.012 | 0.008 | 6.3 | 1.4 | 0.9 | 0.006 | 0.006 | - | - | Comparative Example |
| z | 0.38 | 0.38 | 22.4 | 0.014 | 0.006 | 2.8 | 3.6 | 3.8 | 0.013 | 0.008 | - | - | Conforming Example |
| aa | 0.48 | 0.44 | 21.0 | 0.011 | 0.009 | 11.6 | 2.4 | 1.2 | 0.012 | 0.007 | - | - | Conforming Example |
| ab | 0.42 | 0.38 | 22.4 | 0.014 | 0.006 | 2.8 | 5.0 | 1.8 | 0.013 | 0.004 | - | - | Comparative Example |

[Table 3]

[Table 3]

Table 3

| Joint No. | steel plate No. | Wire No. | Welding heat input (kJ/mm) | Weld metal chemical composition, mass% | | | | | | | | | | | | Remarks |
|---|---|---|---|---|---|---|---|---|---|---|---|---|---|---|---|---|
| | | | | C | Si | Mn | P | S | Ni | Cr | Mo | N | O | V,Ti,Nb,W | Cu,Al,Ca,REM | |
| 1 | A | a | 2.0 | 0.46 | 0.29 | 24.0 | 0.009 | 0.016 | 3.8 | 0.5 | 1.2 | 0.008 | 0.018 | - | - | Example |
| 2 | A | b | 2.6 | 0.40 | 0.45 | 19.8 | 0.020 | 0.012 | 5.9 | 3.2 | 0.4 | 0.011 | 0.031 | - | - | Example |
| 3 | A | c | 3.4 | 0.21 | 0.32 | 17.6 | 0.003 | 0.017 | 11.6 | 2.6 | 0.1 | 0.025 | 0.032 | V:0.4, Ti:0.6, Nb:0.1 | - | Example |
| 4 | A | d | 5.2 | 0.14 | 0.13 | 16.0 | 0.013 | 0.022 | 3.5 | 0.6 | 4.2 | 0.044 | 0.042 | W:0.5 | - | Example |
| 5 | A | e | 2.1 | 0.34 | 0.32 | 16.7 | 0.016 | 0.010 | 5.1 | 1.1 | 1.3 | 0.005 | 0.082 | V:0.7, Ti:0.7 | - | Example |
| 6 | A | f | 3.2 | 0.59 | 0.59 | 21.4 | 0.012 | 0.006 | 7.4 | 1.3 | 0.1 | 0.011 | 0.042 | Nb:0.8 | - | Example |
| 7 | A | g | 4.2 | 0.28 | 0.16 | 18.0 | 0.009 | 0.010 | 3.3 | 0.6 | 2.1 | 0.034 | 0.053 | - | Cu:1.3, Al:0.6 | Example |
| 8 | A | h | 2.1 | 0.71 | 0.37 | 16.1 | 0.012 | 0.020 | 5.8 | 0.8 | 2.5 | 0.030 | 0.018 | - | Al:0.1 | Example |
| 9 | A | i | 1.6 | 0.40 | 0.19 | 13.7 | 0.019 | 0.006 | 8.8 | 1.6 | 1.8 | 0.076 | 0.024 | W:0.7 | Al:0.5, REM: 0.009 | Example |
| 10 | A | j | 1.2 | 0.21 | 0.83 | 19.1 | 0.012 | 0.018 | 2.2 | 1.3 | 2.4 | 0.009 | 0.026 | - | REM: 0.005 | Example |
| 11 | A | k | 1.5 | 0.28 | 0.28 | 19.6 | 0.006 | 0.013 | 3.7 | 0.7 | 1.2 | 0.013 | 0.028 | Ti:0.2 | Ca:0.001 | Example |
| 12 | A | l | 1.8 | 0.37 | 0.61 | 18.1 | 0.012 | 0.013 | 4.5 | 0.9 | 0.1 | 0.029 | 0.031 | Ti:0.1, Nb:0.3 | Cu:0.7, REM: 0.015 | Example |
| 13 | A | m | 2.2 | 0.38 | 0.35 | 16.2 | 0.018 | 0.007 | 6.8 | 1.0 | 3.0 | 0.045 | 0.034 | V:0.1 | Ca:0.005 | Example |
| 14 | A | n | 2.6 | 0.43 | 0.24 | 15.4 | 0.011 | 0.008 | 2.6 | 1.5 | 1.8 | 0.014 | 0.024 | Nb:0.1 | - | Example |
| 15 | A | o | 3.8 | 0.16 | 0.40 | 19.5 | 0.011 | 0.014 | 8.3 | 1.3 | 3.2 | 0.011 | 0.035 | V:0.3, Ti:0.2 | - | Example |

| Joint No. | steel plate No. | Wire No. | Welding heat input (kJ/mm) | Weld metal chemical composition, mass% | | | | | | | | | | V,Ti,Nb, W | Cu,Al,Ca, REM | Remarks |
|---|---|---|---|---|---|---|---|---|---|---|---|---|---|---|---|---|
| | | | | C | Si | Mn | P | S | Ni | Cr | Mo | N | O | | | |
| 16 | A | p | 4.2 | 0.31 | 0.38 | 16.1 | 0.014 | 0.022 | 0.9 | 2.1 | 0.5 | 0.015 | 0.061 | - | Ca:0.001, REM: 0.005 | Comparative Example |
| 17 | A | g | 1.4 | 0.37 | 0.22 | 28.8 | 0.010 | 0.019 | 3.1 | 1.5 | 2.3 | 0.014 | 0.016 | Ti:0.4 | Ca:0.001 | Comparative Example |
| 18 | A | r | 0.8 | 0.85 | 0.30 | 15.9 | 0.016 | 0.012 | 3.6 | 1.0 | 3.5 | 0.031 | 0.024 | - | - | Comparative Example |
| 19 | A | s | 2.8 | 0.30 | 0.57 | 19.7 | 0.005 | 0.016 | 3.0 | 0.2 | 1.0 | 0.041 | 0.028 | V:0.2, Nb:0.5 | - | Comparative Example |
| 20 | A | t | 2.0 | 0.30 | 0.48 | 11.9 | 0.019 | 0.016 | 4.5 | 1.2 | 3.7 | 0.053 | 0.038 | - | Al:0.2 | Comparative Example |
| 21 | A | u | 2.6 | 0.43 | 1.22 | 17.0 | 0.019 | 0.010 | 5.5 | 1.2 | 0.3 | 0.010 | 0.034 | Ti:0.1 | Cu:0.2, Ca:0.001 | Comparative Example |
| 22 | A | v | 2.2 | 0.34 | 0.19 | 16.1 | 0.042 | 0.009 | 2.7 | 1.0 | 1.0 | 0.006 | 0.037 | - | Ca:0.006, REM: 0.011 | Comparative Example |
| 23 | A | w | 2.0 | 0.56 | 0.32 | 20.2 | 0.005 | 0.049 | 4.5 | 0.6 | 1.4 | 0.013 | 0.029 | - | - | Comparative Example |
| 24 | A | x | 6.2 | 0.37 | 0.05 | 15.8 | 0.012 | 0.010 | 3.2 | 0.7 | 0.7 | 0.016 | 0.028 | - | A1:0.1 | Comparative Example |
| 25 | A | y | 2.1 | 0.03 | 0.36 | 15.9 | 0.008 | 0.005 | 6.9 | 1.1 | 0.7 | 0.017 | 0.024 | - | - | Comparative Example |
| 26 | A | z | 0.4 | 0.30 | 0.30 | 18.4 | 0.010 | 0.004 | 3.9 | 2.9 | 3.1 | 0.019 | 0.057 | - | - | Comparative Example |
| 27 | A | aa | 0.4 | 0.40 | 0.35 | 17.8 | 0.008 | 0.007 | 11.2 | 2.0 | 1.0 | 0.016 | 0.061 | - | - | Comparative Example |
| 28 | A | ab | 0.4 | 0.36 | 0.31 | 19.7 | 0.011 | 0.004 | 3.6 | 4.4 | 1.6 | 0.016 | 0.028 | - | - | Comparative Example |

EP 4 252 959 A1

(continued)

| Joint No. | steel plate No. | Wire No. | Welding heat input (kJ/mm) | Weld metal chemical composition, mass% | | | | | | | | | | | | Remarks |
|---|---|---|---|---|---|---|---|---|---|---|---|---|---|---|---|---|
| | | | | C | Si | Mn | P | S | Ni | Cr | Mo | N | O | V,Ti,Nb, W | Cu,Al,Ca, REM | |
| <u>29</u> | B | a | <u>0.4</u> | 0.51 | 0.28 | 24.8 | 0.012 | 0.017 | 3.1 | 0.6 | 1.4 | 0.009 | 0.028 | - | Cu:0.1, Ca:0.001 | Comparative Example |
| <u>30</u> | B | b | <u>7.2</u> | 0.45 | 0.45 | 21.4 | 0.024 | 0.013 | 5.4 | 3.4 | 0.5 | 0.009 | 0.021 | - | Cu:0.1, Ca:0.001 | Comparative Example |
| 31 | B | c | 2.4 | 0.25 | 0.33 | 20.7 | 0.005 | 0.020 | 11.8 | 3.0 | 0.1 | 0.008 | 0.028 | V:0.4, Ti:0.7, Nb:0.2 | Cu:0.1, Ca:0.001 | Example |
| 32 | C | a | 3.1 | 0.47 | 0.34 | 24.5 | 0.010 | 0.020 | 3.8 | 0.5 | 1.2 | 0.010 | 0.026 | - | - | Example |
| 33 | C | b | 3.5 | 0.42 | 0.51 | 20.9 | 0.021 | 0.016 | 5.8 | 3.1 | 0.4 | 0.008 | 0.019 | - | - | Example |
| 34 | C | c | 3.2 | 0.21 | 0.38 | 18.7 | 0.004 | 0.022 | 11.9 | 2.8 | 0.1 | 0.013 | 0.034 | V:0.4, Ti:0.7, Nb:0.2 | - | Example |

[Table 4]

Table 4

| Joint No. | Weld cracking | 0.2% proof stress of weld metal WPS (MPa) | Yield strength of steel plate BYS (MPa) | Formula (1)* | Tensile strength of weld metal WTS (MPa) | Tensile strength of steel plate BTS (MPa) | Formula (2)** | Absorbed energy of weld metal $vE_{-196}$ (J) | Absorbed energy of weld bond $vE_{-196}$ (J) | Crack propagation position | Remarks |
|---|---|---|---|---|---|---|---|---|---|---|---|
| 1 | Not occurred | 484 | 670 | ○ | 819 | 740 | ○ | 85 | 54 | Weld metal | Example |
| 2 | Not occurred | 528 | 670 | ○ | 817 | 740 | ○ | 64 | 48 | Weld metal | Example |
| 3 | Not occurred | 560 | 670 | ○ | 674 | 740 | ○ | 92 | 85 | Weld metal | Example |
| 4 | Not occurred | 476 | 670 | ○ | 788 | 740 | ○ | 86 | 73 | Weld metal | Example |
| 5 | Not occurred | 504 | 670 | ○ | 746 | 740 | ○ | 58 | 47 | Weld metal | Example |
| 6 | Not occurred | 550 | 670 | ○ | 792 | 740 | ○ | 96 | 46 | Weld metal | Example |
| 7 | Not occurred | 429 | 670 | ○ | 721 | 740 | ○ | 79 | 81 | Weld metal | Example |
| 8 | Not occurred | 504 | 670 | ○ | 776 | 740 | ○ | 83 | 57 | Weld metal | Example |
| 9 | Not occurred | 516 | 670 | ○ | 682 | 740 | ○ | 59 | 62 | Weld metal | Example |
| 10 | Not occurred | 470 | 670 | ○ | 809 | 740 | ○ | 73 | 46 | Weld metal | Example |
| 11 | Not occurred | 435 | 670 | ○ | 718 | 740 | ○ | 91 | 73 | Weld metal | Example |
| 12 | Not occurred | 435 | 670 | ○ | 679 | 740 | ○ | 58 | 46 | Weld metal | Example |

| Joint No. | Weld cracking | 0.2% proof stress of weld metal WPS (MPa) | Yield strength of steel plate BYS (MPa) | Formula (1)* | Tensile strength of weld metal WTS (MPa) | Tensile strength of steel plate BTS (MPa) | Formula (2)** | Absorbed energy of weld metal vE$_{-196}$ (J) | Absorbed energy of weld bond vE$_{-196}$ (J) | Crack propagation position | Remarks |
|---|---|---|---|---|---|---|---|---|---|---|---|
| 13 | Not occurred | 507 | 670 | ○ | 747 | 740 | ○ | 72 | 54 | Weld metal | Example |
| 14 | Not occurred | 434 | 670 | ○ | 738 | 740 | ○ | 59 | 52 | Weld metal | Example |
| 15 | Not occurred | 566 | 670 | ○ | 798 | 740 | ○ | 93 | 56 | Weld metal | Example |
| 16 | Occurred | 389 | 670 | ○ | 682 | 740 | ○ | 82 | 57 | Weld metal | Comparative Example |
| 12 | Occurred | 613 | 670 | × | 1044 | 740 | × | 25 | 8 | Heat-affected zone | Comparative Example |
| 18 | Occurred | 527 | 670 | ○ | 874 | 740 | × | 35 | 25 | Heat-affected zone | Comparative Example |
| 19 | Not occurred | 447 | | ○ | 735 | 740 | ○ | 21 | 18 | Weld metal | Comparative Example |
| 20 | Not occurred | 460 | 670 | ○ | 716 | 740 | ○ | 8 | 14 | Weld metal | Comparative Example |
| 21 | Occurred | 458 | 670 | ○ | 683 | 740 | ○ | 35 | 32 | Weld metal | Comparative Example |
| 22 | Occurred | 388 | 670 | ○ | 663 | 740 | ○ | 36 | 26 | Weld metal | Comparative Example |
| 23 | Occurred | 476 | 670 | ○ | 775 | 740 | ○ | 41 | 29 | Weld metal | Comparative Example |
| 24 | Not occurred | 371 | 670 | ○ | 622 | 740 | ○ | 12 | 14 | Weld metal | Comparative Example |

| Joint No. | Weld cracking | 0.2% proof stress of weld metal WPS (MPa) | Yield strength of steel plate BYS (MPa) | Formula (1)* | Tensile strength of weld metal WTS (MPa) | Tensile strength of steel plate BTS (MPa) | Formula (2)** | Absorbed energy of weld metal vE$_{-196}$ (J) | Absorbed energy of weld bond vE$_{-196}$ (J) | Crack propagation position | Remarks |
|---|---|---|---|---|---|---|---|---|---|---|---|
| 25 | Not occurred | 397 | 670 | ○ | 557 | 740 | ○ | 57 | 34 | Weld metal | Comparative Example |
| 26 | Not occurred | 620 | 670 | × | 1064 | 740 | × | 34 | 11 | Heat-affected zone | Comparative Example |
| 27 | Not occurred | 591 | 670 | × | 821 | 740 | ○ | 42 | 21 | Heat-affected zone | Comparative Example |
| 28 | Occurred | 564 | 670 | ○ | 971 | 740 | × | 51 | 18 | Heat-affected zone | Comparative Example |
| 29 | Not occurred | 623 | 650 | × | 891 | 760 | × | 48 | 12 | Heat-affected zone | Comparative Example |
| 30 | Not occurred | 380 | 650 | ○ | 650 | 760 | ○ | 82 | 67 | Weld metal | Comparative Example |
| 31 | Not occurred | 446 | 650 | ○ | 781 | 760 | ○ | 91 | 82 | Weld metal | Example |
| 32 | Not occurred | 450 | 580 | ○ | 802 | 720 | ○ | 72 | 76 | Weld metal | Example |
| 33 | Not occurred | 453 | 580 | ○ | 780 | 720 | ○ | 78 | 84 | Weld metal | Example |
| 34 | Not occurred | 421 | 580 | ○ | 702 | 720 | ○ | 86 | 91 | Weld metal | Example |

*)[WPS]≤[BYS]-100MPa WPS: 0.2% proof stress of weld metal, BYS: yield strength of steel plate

**)[WTS]≤[BTS]+100MPa WTS: tensile strength of weld metal, BTS: tensile strength of steel plate

In each Example within the range according to the present disclosure, no weld cracking (hot cracking) was found. In each Example, the obtained weld metal had high strength, specifically, a yield strength (0.2 % proof stress) of 400 MPa or more and a tensile strength of 660 MPa or more at room temperature, and excellent low-temperature toughness, specifically, an absorbed energy $vE_{-196}$ in the Charpy impact test at a test temperature of -196 °C of 27 J or more. The weld bond also had excellent low-temperature toughness, specifically, an absorbed energy $vE_{-196}$ of 27 J or more. This indicates that the obtained weld joint had high strength and excellent low-temperature toughness.

In each Comparative Example outside the range according to the present disclosure, the desired weld joint was unable to be obtained because of any of the following: the occurrence of weld cracking, insufficient strength of the weld metal, low low-temperature toughness of the weld metal, and low low-temperature toughness of the weld bond.

In each Comparative Example in which the 0.2 % proof stress of the weld metal did not satisfy the formula (1) and/or the tensile strength of the weld metal did not satisfy the formula (2), the crack propagation path (crack propagation position) was in the heat-affected zone (HAZ), and the low-temperature toughness was low. In the case where the 0.2 % proof stress of the weld metal satisfied the formula (1) and the tensile strength of the weld metal satisfied the formula (2), the crack propagation path was in the weld metal.

## Claims

1. A weld joint comprising steel plates and a weld metal, the weld joint formed by welding the steel plates through the weld metal,

    the steel plates comprising a steel plate chemical composition containing, in mass%,

            C: 0.02 % to 0.20 %,
            Si: 0.05 % to 0.50 %,
            Mn: 0.10 % to 1.80 %,
            P: 0.030 % or less,
            S: 0.030 % or less,
            Ni: 6.5 % to 10.0 %,
            N: 0.010 % or less, and
            O: 0.010 % or less,
            with a balance consisting of Fe and inevitable impurities,

    the weld metal comprising:

    a weld metal chemical composition containing, in mass%,

            C: 0.10 % to 0.80 %,
            Si: 0.10 % to 1.00 %,
            Mn: 13.0 % to 25.0 %,
            P: 0.030 % or less,
            S: 0.030 % or less,
            Ni: 1.0 % to 12.0 %,
            Cr: 0.4 % to 3.8 %,
            Mo: 0.1 % to 5.0 %,
            N: 0.080 % or less, and
            O: 0.100 % or less,
            with a balance consisting of Fe and inevitable impurities; and

    tensile properties of a 0.2 % proof stress WPS of 400 MPa or more and a tensile strength WTS of 660 MPa or more,

    a yield strength BYS of the steel plate and the 0.2 % proof stress WPS of the weld metal satisfying the following formula (1), and
    a tensile strength BTS of the steel plate and the tensile strength WTS of the weld metal satisfying the following formula (2):

$$[WPS] \leq [BYS] - 100 \text{ MPa} \qquad \dots (1)$$

$$[WTS] \leq [BTS] + 100 \text{ MPa} \qquad \dots (2)$$

where WPS is the 0.2 % proof stress of the weld metal in MPa, WTS is the tensile strength of the weld metal in MPa, BYS is the yield strength of the steel plate in MPa, and BTS is the tensile strength of the steel plate in MPa.

2. The weld joint according to claim 1, wherein the weld metal chemical composition further contains, in mass%, one or more selected from the following (i) and (ii): (i) one or more selected from the group consisting of V: 1.0 % or less, Ti: 1.0 % or less, Nb: 1.0 % or less, and W: 1.0 % or less; and (ii) one or more selected from the group consisting of Cu: 2.0 % or less, Al: 1.0 % or less, Ca: 0.010 % or less, and REM: 0.020 % or less.

3. The weld joint according to claim 1 or 2, wherein the steel plate chemical composition further contains, in mass%, one or more selected from the following (iii) and (iv): (iii) one or more selected from the group consisting of Cu: 0.5 % or less, Al: 0.1 % or less, Cr: 1.0 % or less, Mo: 1.0 % or less, V: 0.2 % or less, Nb: 0.2 % or less, and Ti: 0.2 % or less; and (iv) one or more selected from the group consisting of B: 0.005 % or less, Ca: 0.005 % or less, and REM: 0.020 % or less.

4. A production method for a weld joint excellent in low-temperature toughness, comprising:

subjecting steel plates to gas metal arc welding using a solid wire to form a weld metal to obtain the weld joint; and adjusting welding conditions of the gas metal arc welding to obtain a welding heat input per one pass of 0.5 kJ/mm to 6.0 kJ/mm so that a 0.2 % proof stress WPS of the weld metal satisfies the following formula (1) in relation to a yield strength BYS of the steel plate and a tensile strength WTS of the weld metal satisfies the following formula (2) in relation to a tensile strength BTS of the steel plate:

$$[WPS] \leq [BYS] - 100 \text{ MPa} \qquad \dots (1)$$

$$[WTS] \leq [BTS] + 100 \text{ MPa} \qquad \dots (2)$$

where WPS is the 0.2 % proof stress of the weld metal in MPa, WTS is the tensile strength of the weld metal in MPa, BYS is the yield strength of the steel plate in MPa, and BTS is the tensile strength of the steel plate in MPa, the steel plates comprising a steel plate chemical composition containing, in mass%,

C: 0.02 % to 0.20 %,
Si: 0.05 % to 0.50 %,
Mn: 0.10 % to 1.80 %,
P: 0.030 % or less,
S: 0.030 % or less,
Ni: 6.5 % to 10.0 %,
N: 0.010 % or less, and
O: 0.010 % or less,
with a balance consisting of Fe and inevitable impurities,

the solid wire comprising a wire chemical composition containing, in mass%,

C: 0.15 % to 1.00 %,
Si: 0.15 % to 1.10 %,
Mn: 17.0 % to 30.0 %,
P: 0.030 % or less,
S: 0.030 % or less,
Ni: 0.2 % to 13.0 %,
Cr: 0.4 % to 3.8 %,
Mo: 0.1 % to 5.0 %,

N: 0.060 % or less, and
O: 0.020 % or less,
with a balance consisting of Fe and inevitable impurities,

the weld metal comprising:

a weld metal composition containing, in mass%,

C: 0.10 % to 0.80 %,
Si: 0.10 % to 1.00 %,
Mn: 13.0 % to 25.0 %,
P: 0.030 % or less,
S: 0.030 % or less,
Ni: 1.0 % to 12.0 %,
Cr: 0.4 % to 3.8 %,
Mo: 0.1 % to 5.0 %,
N: 0.080 % or less, and
O: 0.100 % or less,
with a balance consisting of Fe and inevitable impurities; and

tensile properties of a 0.2 % proof stress WPS of 400 MPa or more and a tensile strength WTS of 660 MPa or more.

5. The production method for a weld joint according to claim 4, wherein the wire chemical composition further contains, in mass%, one or more selected from the following (v) and (vi): (v) one or more selected from the group consisting of V: 1.0 % or less, Ti: 1.0 % or less, Nb: 1.0 % or less, and W: 1.0 % or less; and (vi) one or more selected from the group consisting of Cu: 2.0 % or less, Al: 1.0 % or less, Ca: 0.010 % or less, and REM: 0.020 % or less, and the weld metal chemical composition further contains, in mass%, one or more selected from the following (i) and (ii): (i) one or more selected from the group consisting of V: 1.0 % or less, Ti: 1.0 % or less, Nb: 1.0 % or less, and W: 1.0 % or less; and (ii) one or more selected from the group consisting of Cu: 2.0 % or less, Al: 1.0 % or less, Ca: 0.010 % or less, and REM: 0.020 % or less.

6. The production method for a weld joint according to claim 4 or 5, wherein the steel plate chemical composition further contains, in mass%, one or more selected from the following (iii) and (iv): (iii) one or more selected from the group consisting of Cu: 0.5 % or less, Al: 0.1 % or less, Cr: 1.0 % or less, Mo: 1.0 % or less, V: 0.2 % or less, Nb: 0.2 % or less, and Ti: 0.2 % or less; and (iv) one or more selected from the group consisting of B: 0.005 % or less, Ca: 0.005 % or less, and REM: 0.020 % or less.

## INTERNATIONAL SEARCH REPORT

International application No.

**PCT/JP2021/033208**

| A. | CLASSIFICATION OF SUBJECT MATTER |
|---|---|

***B23K 35/30***(2006.01)i; ***C22C 38/00***(2006.01)i; ***C22C 38/08***(2006.01)i; ***C22C 38/58***(2006.01)i
FI:  B23K35/30 320C; C22C38/08; C22C38/58; C22C38/00 302B

According to International Patent Classification (IPC) or to both national classification and IPC

| B. | FIELDS SEARCHED |
|---|---|

Minimum documentation searched (classification system followed by classification symbols)

B23K35/30; C22C38/00; C22C38/08; C22C38/58

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020/203334 A1 (JFE STEEL CORP.) 08 October 2020 (2020-10-08) | 1-6 |
| A | WO 2020/203335 A1 (JFE STEEL CORP.) 08 October 2020 (2020-10-08) | 1-6 |
| A | JP 2019-519675 A (EXXONMOBIL RESEARCH AND ENGINEERING CO.) 11 July 2019 (2019-07-11) | 1-6 |
| A | WO 2020/208735 A1 (NIPPON STEEL CORP.) 15 October 2020 (2020-10-15) | 1-6 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 November 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 252 959 A1

**INTERNATIONAL SEARCH REPORT**
Information on patent family members

International application No.

**PCT/JP2021/033208**

| Patent document cited in search report | | | Publication date (day/month/year) | Patent family member(s) | | | Publication date (day/month/year) |
|---|---|---|---|---|---|---|---|
| WO | 2020/203334 | A1 | 08 October 2020 | (Family: none) | | | |
| WO | 2020/203335 | A1 | 08 October 2020 | (Family: none) | | | |
| JP | 2019-519675 | A | 11 July 2019 | US | 2017/0312862 | A1 | |
| | | | | WO | 2017/192621 | A1 | |
| | | | | EP | 3452248 | A1 | |
| | | | | AR | 108268 | A1 | |
| | | | | AU | 2017259782 | A1 | |
| | | | | CA | 3022940 | A1 | |
| | | | | KR | 10-2018-0132959 | A | |
| | | | | CN | 109070283 | A | |
| | | | | BR | 112018071994 | A2 | |
| | | | | RU | 2018141297 | A | |
| WO | 2020/208735 | A1 | 15 October 2020 | EP | 3812085 | A1 | |
| | | | | US | 2021/0340652 | A1 | |
| | | | | CN | 112512742 | A | |
| | | | | KR | 10-2021-0031474 | A | |

Form PCT/ISA/210 (patent family annex) (January 2015)

**EP 4 252 959 A1**

**Patent documents cited in the description**

- JP 2018144045 A
- JP S49052737 A
- JP 2017502842 A
- JP 6621572 B